# EUROPEAN PATENT SPECIFICATION

(11) **EP 1 531 962 B1**
(45) Date of publication and mention of the grant of the patent: **08.10.2008**
(21) Application number: 03765285.6
(22) Date of filing: 14.07.2003
(51) Int. Cl.: B23K 26/06, B41J 2/16

(54) **LASER PROCESSING METHOD AND LASER PROCESSING APPARATUS USING ULTRA-SHORT PULSE LASER**
LASERBEARBEITUNGSVERFAHREN UND LASERBEARBEITUNGSVORRICHTUNG UNTER VERWENDUNG VON ULTRAKURZPULSLASERN
PROCEDE ET APPAREIL DE TRAITEMENT AU LASER UTILISANT UN LASER A IMPULSIONS ULTRACOURTES

(30) Priority: 23.07.2002 US 397956 P; 28.03.2003 US 402189
(43) Date of publication of application: 25.05.2005
(73) Proprietor: MATSUSHITA ELECTRIC INDUSTRIAL CO., LTD., Kadoma-shi, Osaka 571-8501 (JP)
(72) Inventor: MIZUYAMA, Yosuke, Munakata-shi, Fukuoka 811-3516 (JP); TOYOFUKU, Yosuke c/o Matsushita Electric Ind. Co.,, Osaka-shi Osaka 540-6319 (JP); LIU, Xinbing, Acton, MA 01720 (US); CHENG, Chen-Hsiung c/o Matsushita Electric Ind., 3-7, Shiromi 1-chome Osaka 540-6319 (JP)
(74) Representative: Grünecker, Kinkeldey, Stockmair & Schwanhäusser Anwaltssozietät
(86) International application number: PCT/JP2003/008886
(87) International publication number: WO 2004/009282

(56) References cited:
- EP-A- 1 065 024

## Description

The present invention relates to a laser processing method and a laser processing apparatus using an ultra-short pulse laser beam, a method for making a nozzle, an ink jet head and an ink jet recording apparatus using the laser processing method, and a nozzle plate, an ink jet head and an ink jet recording apparatus manufactured by using the laser processing method.

### Background Art

In recent years, ink jet recording apparatuses have been improved by reducing the size of an ink droplet and by improving the ink droplet flight precision, and ink jet printers have become widespread for office-, SOHO-, and household-use as printing apparatuses that are inexpensive and capable of forming high-definition images.

An ink jet head includes actuators for causing ink to fly, nozzles, ink chambers, etc., and the precision in size and dimension of these components influences the printing performance. Particularly, the nozzle precision has a substantial influence on the image quality and the printing speed.

It is generally known in the art that the ink droplet discharging direction may be deviated or varied if the roundness or the diameter precision of a nozzle hole is poor. Moreover, the ink droplet discharging velocity is substantially dependent on the nozzle depth. Therefore, if the nozzle depth is varied among a plurality of nozzles, the ink droplet discharging velocity is likely to be non-uniform. In view of this, the nozzle specifications are finely designed in the prior art, and forming such nozzles requires a high process precision. Furthermore, a technique for manufacturing nozzles satisfying such fine specifications at a low cost has been longed for in order to reduce the manufacturing cost.

There are various nozzle making methods. Typical methods include etching, electroplating, punching, and laser processing. The present inventors directed our attention to a processing method using an ultra-short pulse laser as a processing method that is capable of minute and precise processing. An example of a method using ultra-short laser pulses to produce a nozzle plate for an ink jet recording head is disclosed in EP-A-1 065 024. Unlike a commonly-used CW laser beam, an ultra-short pulse laser beam has a very short pulse width. In an ultra-short pulse laser process, although the pulse width is short, the amount of energy per pulse is set to be very large so as to process a substance. Such a laser process with a short pulse width and a large energy per pulse is generally called an "ablation process", and the process mechanism thereof is quite different from that of a laser process in which a heat process is performed. In an ablation process, the repetition frequency is set to an appropriate value that is not so large so that only the surface layer of the workpiece is ablated without giving a heat thereto. Thus, an ablation process is a so-called "cool cutting" process, and is characteristic in that substantially no thermal influence is given to the workpiece.

However, an actual attempt to process a workpiece with an ultra-short pulse laser beam showed that the output laser beam may contain, in addition to the primary pulse, a noise component pulse that has a much longer pulse width or a CW noise component if, for example, there is light leakage due to incomplete Q switching. However, although such an unnecessary noise component has a low intensity, it has a pulse width that is larger by an order of magnitude as compared with the primary pulse, and thus has a large energy. Therefore, a large heat is given to the workpiece. As a result, if such a noise component is contained, a cool cutting process is no longer possible, and the workpiece is melted as in a heat process. With a heat process, the surface of the workpiece cannot be smoothed sufficiently, and it is not possible to realize a precise and accurate process.

On the other hand, completely removing the noise component is not practical as it unnecessarily increases the cost of the processing apparatus. Thus, a technique for determining the upper limit of the noise component with which the process can be regarded substantially as a cool cutting process, and performing an ultra-short pulse laser process within the upper limit, has been waited for in the art.

### Disclosure of Invention

An object of the present invention is to realize a process using an ultra-short pulse laser beam that can be regarded substantially as a cool cutting process.

Another object of the present invention is to determine an index for determining what level of noise component can be tolerated when realizing a precise process, and to process a material based on the index.

A laser processing method of the present invention is a laser processing method, including the step of processing a material using an ultra-short pulse laser beam, wherein an intensity of a largest noise component pulse in the ultra-short pulse laser beam is 2.5% or less of an intensity of a primary pulse in the ultra-short pulse laser beam.

In this way, a laser process that can be regarded substantially as a cool cutting process is performed, thereby realizing a process with a high precision and a high accuracy.

In the laser processing method, it is preferred that the material is irradiated with the ultra-short pulse laser beam after the ultra-short pulse laser beam passes through a polarizer and a 1/2 waveplate rotating at a predetermined rotational speed.

In this way, it is possible to suppress the occurrence of a striation, so-called "fringes", on the processed surface of the material.

In the laser processing method, it is preferred that the material is irradiated with the ultra-short pulse laser beam after the ultra-short pulse laser beam passes through a polarizer and a 1/4 waveplate.

In this way, the occurrence of fringes is suppressed more effectively.

A pulse width of the primary pulse of the ultra-short pulse laser beam may be 0.1 ps to 100 ps.

The material may be made of an iron-containing material.

In the laser processing method, the material may be processed while the ultra-short pulse laser beam is swung with respect to the material.

The laser processing method may be a method in which: the material is a nozzle plate for an ink jet head; and a nozzle is formed in the nozzle plate by using the ultra-short pulse laser beam.

A laser processing apparatus of the present invention is a laser processing apparatus, including an ultra-short pulse laser, wherein an intensity of a largest noise component pulse in an ultra-short pulse laser beam is 2.5% or less of an intensity of a primary pulse in the ultra-short pulse laser beam.

In this way, a laser process that can be regarded substantially as a cool cutting process is performed, thereby realizing a process with a high precision and a high accuracy.

It is preferred that the laser processing apparatus further includes a polarizer, a 1/2 waveplate, and a rotation mechanism for rotating the 1/2 waveplate at a predetermined rotational speed.

Alternatively, the laser processing apparatus may further include a polarizer, and a 1/4 waveplate.

In this way, it is possible to suppress the occurrence of a striation, so-called "fringes", on the processed surface of the material.

The laser processing apparatus may further include a swing mechanism for swinging the ultra-short pulse laser beam with respect to the material.

It is preferred that the laser processing apparatus further includes a measurement apparatus including a photodetector and an oscilloscope for measuring a ratio of an intensity of a noise component pulse in the ultra-short pulse laser beam with respect to the intensity of the primary pulse in the ultra-short pulse laser beam.

The ultra-short pulse laser may further include: a laser generation apparatus including a pump laser diode, a Q switching element, a laser medium, and a reflection mirror; a laser control apparatus for controlling the laser generation apparatus based on an output value of the oscilloscope of the measurement apparatus; and an optical system including a waveplate, a polarizer, a plurality of lenses, and a reflection mirror.

A nozzle plate of the present invention is a nozzle plate that is processed to form a nozzle therein by using an ultra-short pulse laser beam in which an intensity of a largest noise component pulse is 2.5% or less of an intensity of a primary pulse.

The nozzle plate may be made of an iron-containing material.

An ink jet head of the present invention includes a nozzle plate, the nozzle plate being processed to form a nozzle therein by using an ultra-short pulse laser beam in which an intensity of a largest noise component pulse is 2.5% or less of an intensity of a primary pulse.

An ink jet recording apparatus of the present invention includes an ink jet head including a nozzle plate, the nozzle plate being processed to form a nozzle therein by using an ultra-short pulse laser beam in which an intensity of a largest noise component pulse is 2.5% or less of an intensity of a primary pulse.

### Brief Description of Drawings

FIG. **1** illustrates a configuration of a laser processing system.
FIG. **2** illustrates a configuration of an oscillator.
FIG. **3** illustrates a configuration of a regenerative amplifier.
FIG. **4** is a cross-sectional view illustrating a nozzle plate.
FIG. **5** is a cross-sectional view illustrating an ink jet head.
FIG. **6** is a perspective view illustrating an important part of an ink jet printer.
FIG. **7A** is a waveform diagram illustrating a pulse waveform in an oscillator, FIG. **7B** is a waveform diagram illustrating a control signal for a Pockels cell in an amplifier, and FIG. **7C** is a waveform diagram illustrating a pulse waveform in the amplifier.
FIG. **8A** and FIG. **8B** are waveform diagrams each illustrating a pulse waveform of an output of the laser obtained in an experiment of Example 2, wherein FIG. **8A** illustrates a waveform for Sample 1, and FIG. **8B** illustrates a waveform for Sample 10.
FIG. **9A** and FIG. **9B** are pictures each showing a processed surface in the experiment of Example 2, wherein FIG. **9A** shows a processed surface of Sample 1, and FIG. **9B** shows a processed surface of Sample 10.
FIG. **10** is a graph illustrating the relationship between the intensity ratio and the process defect rate in the experiment of Example 2.
FIG. **11** is a picture showing a processed surface in an experiment of Example 3.
FIG. **12** is a graph illustrating the relationship between the intensity ratio and the process defect rate in an experiment of Example 3.
FIG. **13** is a graph illustrating the relationship between the intensity ratio and the process defect rate in an experiment of Example 4.

### Best Mode for Carrying Out the Invention

An embodiment of the present invention will now be described with reference to the drawings.

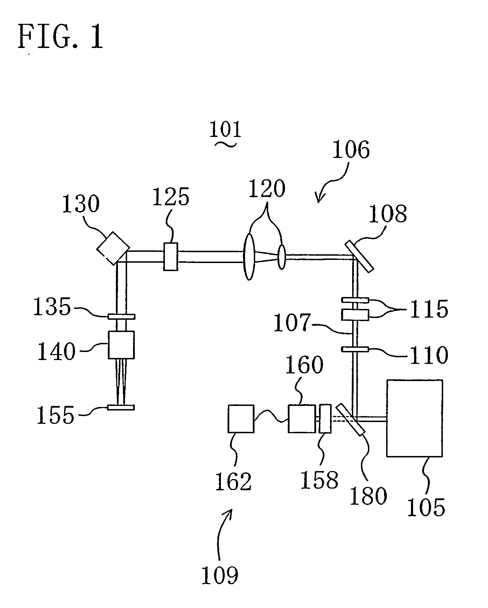

FIG. **1** illustrates a configuration of an ultra-short pulse laser processing system **101** of the present embodiment. The laser processing system **101** includes a laser generation apparatus **105** for outputting an ultra-short pulse laser beam, a laser control apparatus (not shown) for controlling the laser generation apparatus **105,** an optical system **106,** an optical system control apparatus (not shown) for controlling the optical system **106,** and a measurement apparatus **109** for measuring an ultra-short pulse laser beam.

The optical system **106** includes a first mirror **180** for reflecting an ultra-short pulse laser beam **107** output from the laser generation apparatus **105,** a shutter **110,** an attenuator **115,** a second mirror **108,** a beam expander **120,** a waveplate **125,** a scan mirror **130,** a DOE (Diffractive Optical Element) **135,** and a telecentric lens **140.** A workpiece **155** is placed at the end of the path of the laser beam **107.** The attenuator **115,** including a waveplate and a polarizer, is used for adjusting the intensity of the laser beam **107.**

A portion of the laser beam **107** output from the laser generation apparatus **105** is reflected by the first mirror **180.** The laser beam **107** reflected by the first mirror **180** passes through the shutter **110,** and then through the attenuator **115.** The laser beam **107,** having passed through the attenuator **115,** is reflected by the second mirror **108** and expanded by the beam expander **120** with an appropriate magnification so as to be a collimated beam. Then, the collimated laser beam **107** passes through the waveplate **125** for adjusting the polarization direction and is reflected by the scan mirror **130,** after which it passes through the DOE **135.** The laser beam **107** is diffracted by the DOE **135** into a plurality of beams.

The diffracted beams are focused through the telecentric lens **140** and reach the workpiece **155,** thereby processing the workpiece **155.** While the workpiece **155** is processed, the beams can be moved with respect to the workpiece **155** by swinging the scan mirror **130.** Thus, the surface of the workpiece **155** can be ablated in laminar shapes, and the workpiece **155** can be processed into an intended three-dimensional shape.

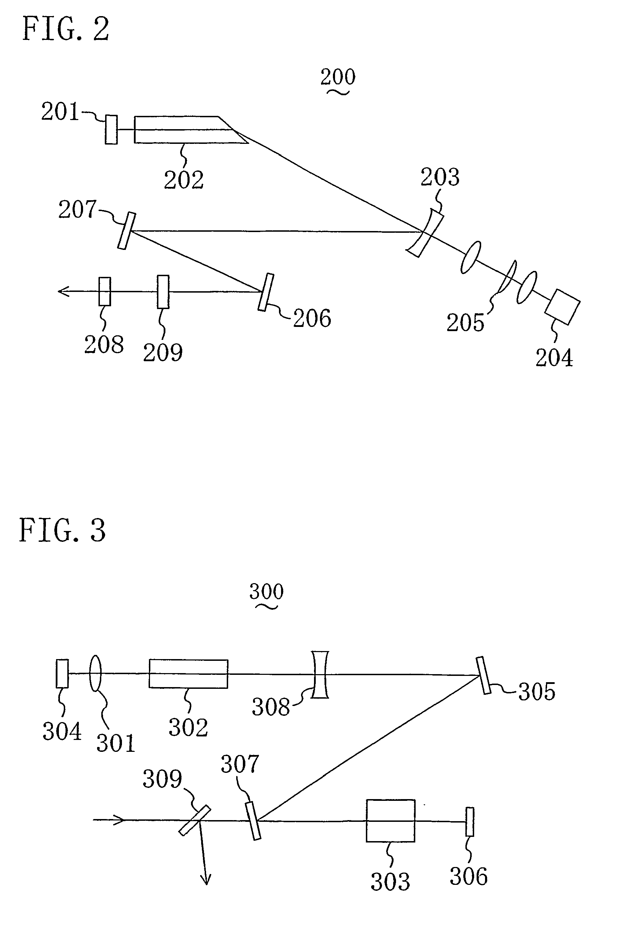

Next, the configuration of the laser generation apparatus **105** will be described in detail. The laser generation apparatus **105** includes an oscillator **200** as illustrated in FIG. **2****,** and a regenerative amplifier **300** as illustrated in FIG. **3****.** In the laser generation apparatus **105,** the oscillator **200** generates a pulse laser beam, and the regenerative amplifier **300** cuts out a pulse from the pulse laser beam at a predetermined frequency and amplifies the cut-out pulse so as to output the amplified pulses.

As illustrated in **FIG. 2****,** the oscillator **200** includes a pump laser **204,** a control apparatus (not shown) for controlling the temperature of the pump laser **204,** a lens 205, a laser medium **202,** a Q switching element **207,** a pulse stretcher **209,** an output coupler **208,** and reflection mirrors **201, 203** and **206.**

As illustrated in FIG. **3****,** the regenerative amplifier **300** includes a pump laser **304,** a laser medium **302,** a Q switching element **303,** a polarizer **307,** an output coupler **309,** reflection mirrors **305** and **306,** and lenses **301** and **308.**

Although not shown, the laser control apparatus includes a pump laser driver, a pump laser temperature control driver, a Q switching element driver, a Q switching delay time control apparatus, a shutter driver, and a scan mirror driver. The pump laser driver adjusts the output of the pump laser by controlling the current to be given to the pump laser. The pump laser temperature control driver controls the temperature of the pump laser, and keeps the pump laser at a constant temperature. The Q switching element driver gives a signal voltage to the Q switching element. The Q switching delay time control apparatus controls the delay time with which the Q switching element driver is operated. The shutter driver closes/opens the shutter **110** for blocking/transmitting the laser beam **107.** The scan mirror driver gives a signal to the driving section of the scan mirror **130** so as to adjust the scan mirror **130** to an intended angle.

The measurement apparatus **109** includes a diffuser **158,** a photodetector **160** and an oscilloscope **162.** In the measurement apparatus **109,** a laser beam, having passed through the first mirror **180,** is diffused by the diffuser **158** into an isotropic laser beam. Then, the number of photons of the laser beam is measured by the photodetector **160.** The number of photons is converted to a voltage value, and is measured by the oscilloscope **162.** The oscilloscope **162** outputs the waveform of the voltage value.

The type of workpiece to be processed by the laser processing system **101** is not limited to any particular type of workpiece. For example, the laser processing system **101** can be used for processing a nozzle plate of an ink jet head, as described below, to form nozzles therein.

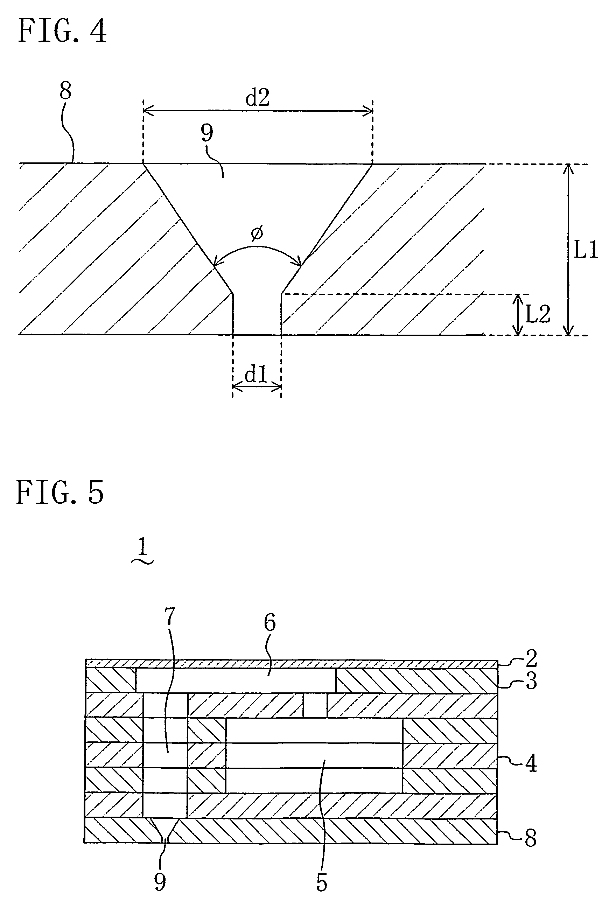

In the present embodiment, the workpiece is a nozzle plate **8** as illustrated in FIG. **4****.** An upper portion of a nozzle **9** of the nozzle plate **8** is tapered so that the inner diameter increases in the upward direction, with a lower portion thereof being a through hole having a constant inner diameter. Although the shape and the dimension of the nozzle plate **8** and the nozzle **9** are not limited to any particular shape or dimension, an example of the nozzle plate **8** and the nozzle **9** that can suitably be used is such that the thickness L1 of the nozzle plate **8** is 50 µm, the length L2 of the through hole having a constant inner diameter is 10 µm, the inner diameter d1 of the through hole is 20 µm, the maximum inner diameter d2 of the tapered portion is 85 µm, and the taper angle ϕ is 80°.

As illustrated in FIG. **5****,** an ink jet head **1** includes the nozzle plate **8,** a head body **4** obtained by layering a plurality of stainless steel plates together, a pressure chamber forming plate **3** made of a photosensitive glass, and a piezoelectric actuator **2,** which are layered together. Although not shown in FIG. **5****,** the nozzle plate **8** includes a number of nozzles **9** arranged in a direction perpendicular to the sheet of FIG. **5****.**

A plurality of pressure chambers **6** communicated to the respective nozzles **9** via ink channels **7,** and a common ink chamber **5** communicated to the pressure chambers **6,** are provided inside the ink jet head **1.**

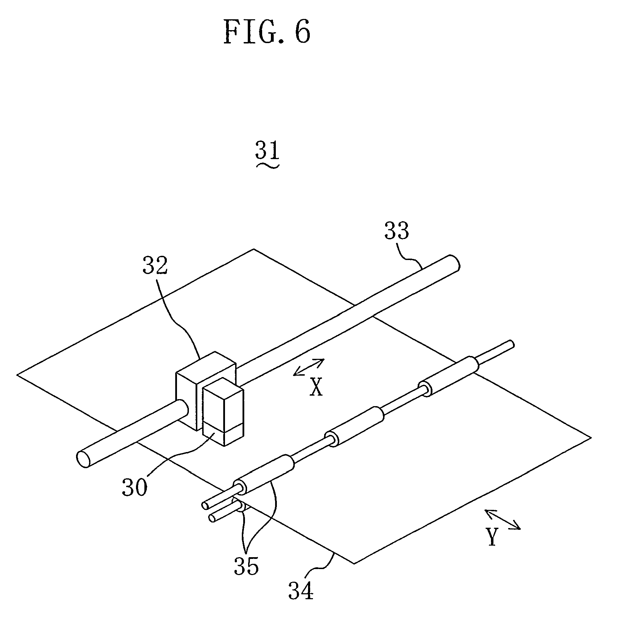

FIG. **6** illustrates a general structure of an ink jet printer **31** using the ink jet head **1** therein. The ink jet head **30** is fixed to a carriage **32** that is provided with a carriage motor (not shown). The carriage **32** is reciprocally moved by the carriage motor in a primary scanning direction X while being guided by a carriage shaft that extends in the primary scanning direction X. Therefore, the ink jet head **30** is also reciprocally moved in the primary scanning direction X.

Recording paper **34** is sandwiched between two carrier rollers **35** rotated by a carrier motor (not shown), and is carried in a secondary scanning direction Y perpendicular to the primary scanning direction X by the carrier motor and the carrier rollers **35.**

Note however that the recording apparatus of the present invention is not limited to the printer **31** as described above, but the present invention may alternatively be applied to other types of printers. Moreover, the recording apparatus of the present invention is not limited to a printer, but may alternatively be any other type of recording apparatus having an ink jet head therein, such as a copier or a facsimile.

### EXAMPLE 1

In Example 1, a 1 W semiconductor laser diode was used as the pump laser **204** of the oscillator **200,** an Nd:YLF rod as the laser medium **202,** a SESAM (SEmiconductor Saturable Absorber Mirror) as the Q switching element **207,** and a fused silica etalon as the pulse stretcher **209.** With such a configuration, the oscillator **200** realized laser oscillation with a wavelength of 1053 nm, a frequency of 80 MHz, a pulse width of 15 ps (pico-seconds) and an output of 35 mW.

In the regenerative amplifier **300,** a 16 W semiconductor laser diode was used as the pump laser **304,** an Nd:YLF rod as the laser medium **302,** and a Pockels cell as the Q switching element **303.** Moreover, a TFP (Thin Film Polarizer) was used as the polarizer **307,** and a 99% reflection mirror as the output coupler **309.** The combination of a TFP and a Pockels cell enabled amplification of only a particular pulse laser beam coming from the oscillator **200,** thereby finally obtaining an output of 1 W. The operating frequency of the Pockels cell was set to be 1 kHz, and the repetition frequency of the final output was set to be 1 kHz.

In the laser control apparatus, a waveform generation apparatus DIGITAL DELAY/PULSE GENERATOR DG535 manufactured by STANFORD RESEARCH SYSTEMS Inc. was used as the delay time control apparatus for the Pockels cell driver. In the present example, the delay time of an ON signal and an OFF signal given to the Pockels cell was controlled by the apparatus.

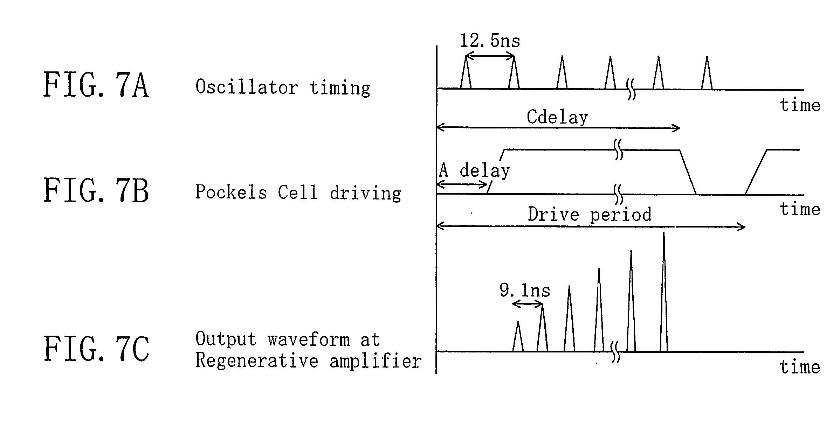

The method for the control will be described with reference to the timing diagrams of FIG. **7A** to FIG. **7C.** FIG. **7A** illustrates the pulse waveform in the oscillator **200.** A pulse having a repetition frequency of 80 MHz and a pulse width of 15 ps was generated by the SESAM in the oscillator **200.**

FIG. **7B** illustrates the control signal for the Pockels cell in the amplifier **300.** In the present example, at the instance a single pulse to be amplified enters the amplifier **300,** an ON signal is given to the Pockels cell. Thus, only those pulses such that the Pockels cell is switched from an OFF state to an ON state upon entering the amplifier **300** are captured and amplified in the amplifier **300.** As to other pulses such that the state of the Pockels cell does not change upon entering the amplifier **300,** such pulses once enter the amplifier **300,** but are then output to the outside without being captured in the amplifier **300,** whereby they are not amplified.

FIG. **7C** illustrates the pulse waveform in the amplifier **300.** A pulse captured in the amplifier **300** reciprocates a number of times in the amplifier **300,** and the intensity thereof is amplified. Then, the pulse is output from the amplifier **300** to the outside when the Pockels cell is turned OFF.

In the measurement apparatus **109,** a high-speed silicon detector DET210 manufactured by THORLABS Inc. was used as the photodetector **160.** The rise time of the detector is less than 1 ns, and the diode capacitance thereof is 1.8 pF. Photons in the laser beam **107** are counted at a rise time of the detector, and converted into an electric signal at a relaxation time corresponding to the rise time.

The electric signal obtained in the photodetector **160** is input to the oscilloscope **162** via a 50 Ω BNC cable. The time dependency of the laser output is observed as a waveform on the oscilloscope **162.** As the oscilloscope **162,** a digital oscilloscope TDS3052B manufactured by Sony/Tektronix Corporation and a digital oscilloscope LT372 manufactured by LeCroy Corporation were used. The sampling frequency of the former oscilloscope TDS3052B was 5 GHz, and the bandwidth thereof was 500 MHz. On the other hand, the sampling frequency of the latter oscilloscope LT372 was 4 GHz, and the bandwidth thereof was 500 MHz.

The electric signal from the photodetector **160** is displayed as a function of time at a relaxation time according to the bandwidth of each of the digital oscilloscopes. The laser output values (voltage values) measured by the two oscilloscopes were substantially the same.

Thermal SmartSensors Standard Sensors 33-1025 manufactured by COHERENT Inc. was used for measuring the power of the laser. When the power as measured by the wattmeter was 1 W, the maximum value of the pulse waveform in the photodetector was 1900 mV with either one of the two oscilloscopes.

### EXAMPLE 2

An experiment was conducted by using the laser processing system **101** of Example 1 with a 1/2 waveplate as the waveplate **125,** and further with a rotation mechanism for rotating the 1/2 waveplate.

In this experiment, the 1/2 waveplate was rotated at a constant rotational speed of 600 rpm. The delay time ("C" delay) of the OFF signal given to the Pockels cell was fixed, while the delay time ("A" delay) of the ON signal was varied. Note that "A" delay is an amount of time by which the timing to capture a pulse to be amplified is delayed. The peak value (Vp) of the primary pico-second pulse and the peak value (Vn) of the largest noise component on the oscilloscope were recorded so as to examine the correlation between the ratio of the peak values and the melting of the processed portion.

A nozzle plate made of SUS304 (manufactured by Hirai Seimitsu Kogyo Corporation, Japan) was used as the workpiece. The laser beam **107** was diffracted by the DOE **135** into 152 beams, and each of the beams was rotated by swinging the scan mirror **130** so as to process the nozzle plate to form 152 nozzle holes simultaneously by a so-called "milling method".

While data measured by the digital oscilloscope TDS3052B manufactured by Sony/Tektronix Corporation is used in the following description, similar results were obtained with the digital oscilloscope LT372 manufactured by LeCroy Corporation.

The results of the experiment are shown in Table 1 below.

**Table 1**

| Sample # | A delay (ns) | C delay (ns) | Vp (mV) | Vn1 (mV) | Vn1/Vp | Melting | Number of defective nozzles |
|---|---|---|---|---|---|---|---|
| 1 | 11.6 | 273.3 | 1400 | 60 | 0.042857 | Observed | 152 |
| 2 | 11.4 | 273.3 | 1480 | 53 | 0.03581 | Observed | 152 |
| 3 | 11.2 | 273.3 | 1500 | 42 | 0.028 | Observed | 152 |
| 4 | 10.8 | 273.3 | 1600 | 35 | 0.02188 | Nearly none | 2 |
| 5 | 10.6 | 273.3 | 1700 | 30 | 0.017647 | Nearly none | 1 |
| 6 | 9.6 | 273.3 | 1900 | 20 | 0.010526 | None | 0 |
| 7 | 8.6 | 273.3 | 1900 | 12 | 0.006316 | None | 0 |
| 8 | 7.6 | 273.3 | 1900 | 10 | 0.005263 | None | 0 |
| 9 | 6.6 | 273.3 | 1900 | 8 | 0.004211 | None | 0 |
| 10 | 5.6 | 273.3 | 1900 | 5 | 0.002632 | None | 0 |

As "A" delay was gradually decreased through Samples 1 to 10, the intensity Vp of the pico-second pulse increased, while the intensity Vn1 of the largest noise component gradually decreased.

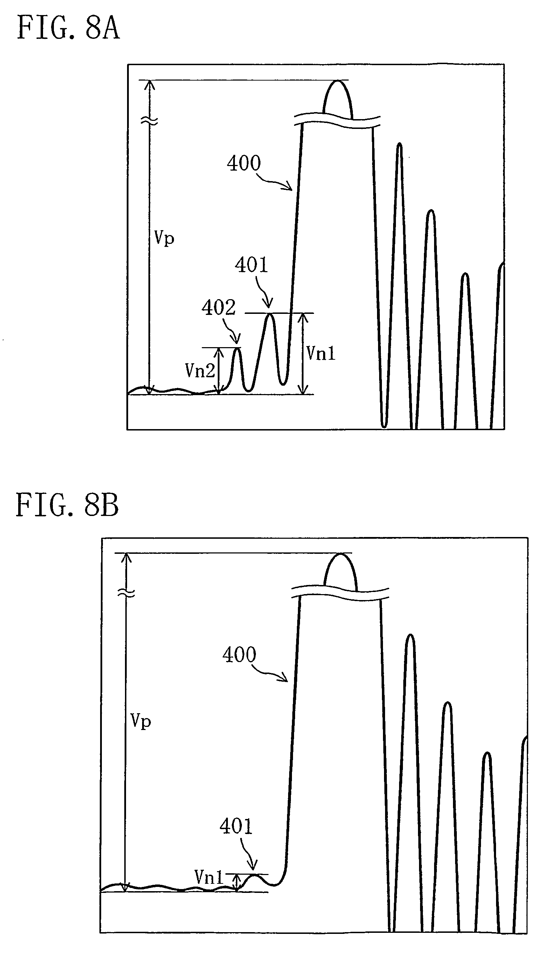

FIG. **8A** and FIG. **8B** each show an output of the photodetector as measured on the oscilloscope. FIG. **8A** illustrates the pulse waveform of the laser beam in the experiment for Sample 1, and FIG. **8B** illustrates the pulse waveform of the laser beam in the experiment for Sample 10. In both figures, reference numeral **400** denotes a primary pico-second pulse, and the oscillating waveform that follows is ringing occurring due to the mismatch between the signal of the pico-second pulse and the internal impedance of the oscilloscope. In FIG. **8A****,** two noise components, i.e., a first pulse **401** and a second pulse **402,** are seen before the primary pulse **400.** In FIG. **8B****,** one noise component, i.e., the first pulse **401,** is seen before the primary pulse 400.

As "A" delay was decreased through Samples 1 to 10, the first pulse **401** gradually decreased accordingly. In the present example, the largest noise component is the first pulse **401.** Therefore, the ratio of the intensity Vn1 of the largest noise component with respect to the intensity Vp of the primary pulse **400** (hereinafter referred to as "intensity ratio") is Vn1/Vp. As "A" delay was decreased through Samples 1 to 10, the intensity ratio Vn1/Vp gradually decreased.

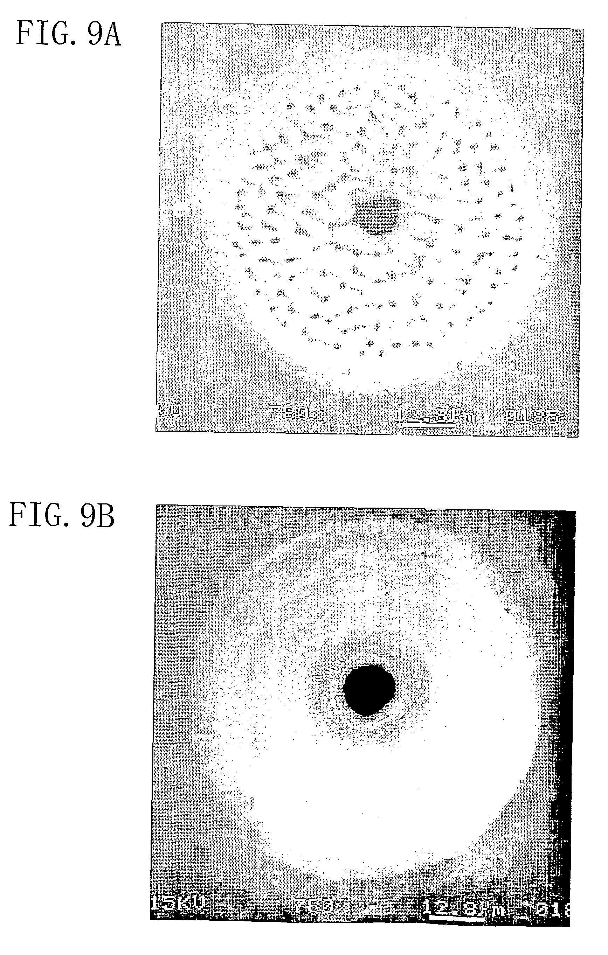

Nozzles of the nozzle plates were pictured by a scanning electron microscope (SEM). FIG. **9A** shows a nozzle of Sample 1, and FIG. **9B** shows a nozzle of Sample 10. As can be seen from FIG. **9A****,** the nozzle of Sample 1 has a large number of tiny holes, which are called as 'needle holes", indicating that the process is of a poor quality. In contrast, as can be seen from FIG. **9B****,** the nozzle of Sample 10 has a very smooth and fine processed surface without the needle holes.

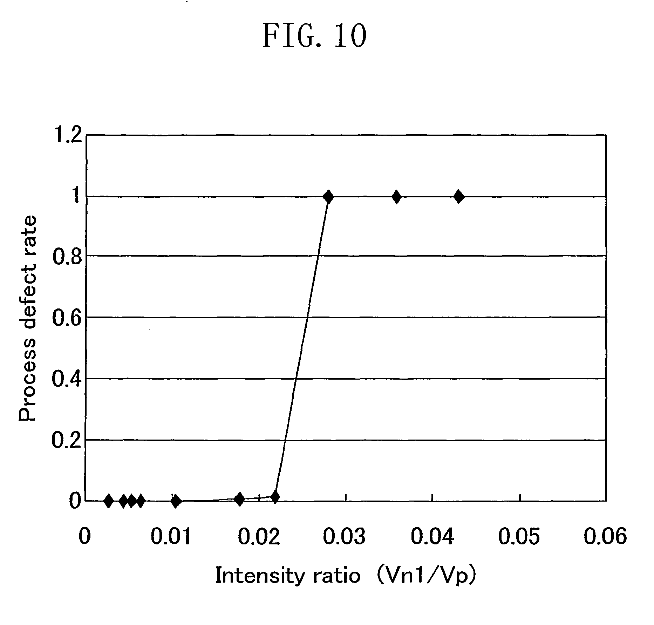

The number of defective nozzles was measured. A nozzle with any needle hole is herein defined as a "defective nozzle". Then, the relationship between the intensity ratio Vn1/Vp and the process defect rate was examined. The term "process defect rate" is herein defined as the ratio of the number of defective nozzles with respect to the total number of nozzles, i.e., 152. The results are shown in FIG. **10****.**

As can be seen from FIG. **10****,** the process defect rate sharply drops in the intensity ratio Vn1/Vp range of 2.3% to 2.8% through Samples 1 to 10. This is believed to be for the following reason. When the noise component is relatively large, the noise component gives a thermal influence that softens the inner surface of the nozzle, after which the primary pulse reaches the softened surface, causing abnormal evaporation or sublimation, whereby the undesirable needle holes are likely to occur. FIG. **10** further suggests that melting due to a thermal influence is reduced as the noise component decreases, and that the melting-reducing effect is critical. It also suggests that it is practically possible to realize a process that can be regarded substantially as a cool cutting process if the intensity ratio is 2.5% or less.

### EXAMPLE 3

In Example 3, an experiment similar to that of Example 2 was conducted with the laser processing system **101** of Example 1 except that the waveplate **125** was omitted.

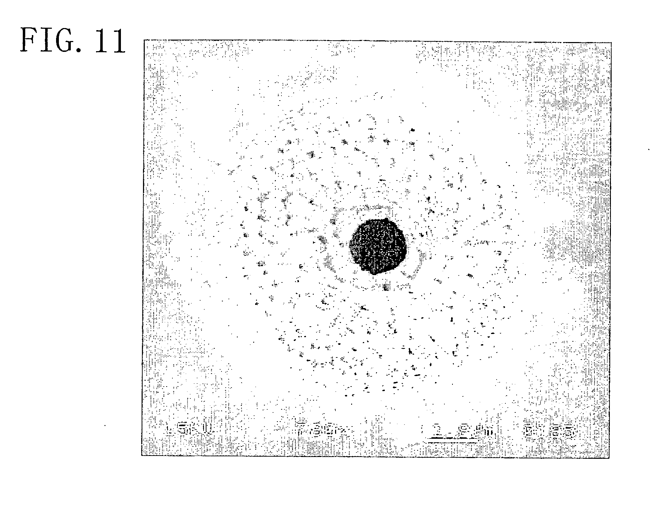

FIG. **11** shows an SEM picture of a nozzle in which undesirable needle holes occurred in this experiment. Also in the present example, it was found that a considerable number of undesirable needle holes occur if the intensity ratio Vn1/Vp is greater than 2.5%. Furthermore, a striation consisting of surface irregularities smaller than the needle holes was observed across the entire nozzle surface in the present example. This striation is called "fringes", which consist of very small surface irregularities. In FIG. 11, the fringes extend in an upper-right to lower-left direction.

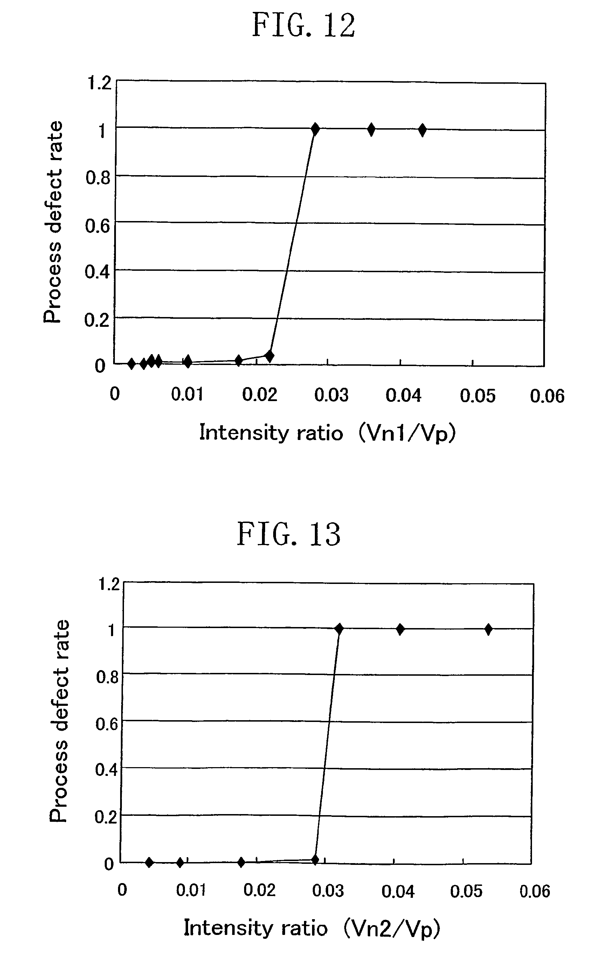

Generally, such fringes occur in a case where the polarization direction of the laser beam is fixed. FIG. **12** shows the relationship between the intensity ratio Vn1/Vp and the process defect rate, and is equivalent to FIG. **10** used in Example 2. A comparison between FIG. **10** and FIG. **12** shows that in the experiment of Example 3, a small number of needle holes occur even with intensity ratios (2.5% or less) with which needle holes were not observed in the experiment of Example 2. This indicates that the occurrence of needle holes is not only related to the intensity ratio but also somewhat related to fringes. A possible reason therefor is that if the polarization direction of the laser beam is fixed, the energy of the beam is localized to form grooves that may grow into needle holes. Thus, it was confirmed that if the polarization direction of the laser beam is changed continuously, it is possible to suppress the occurrence of fringes and thus the occurrence of needle holes.

It was found that in Example 2, the fringe-suppressing effect is increased by increasing the rotational speed of the 1/2 waveplate, though it will not be further discussed in detail below. In view of this, a 1/4 waveplate may alternatively be provided in Example 2, instead of providing the 1/2 waveplate and the rotation mechanism therefor. With the use of a 1/4 waveplate, the oscillating plane of the electric field of the beam can be rotated at a speed that is greater than that when the 1/2 waveplate is rotated at 600 rpm, whereby it is possible to better suppress the occurrence of fringes. Thus, effects similar to or better than those of Example 2 can be obtained by using a 1/4 waveplate.

### EXAMPLE 4

In Example 4, the laser processing system **101** of Example 2 was used, and the alignment of the Pockels cell was changed while fixing the setting value of the Pockels cell. As the alignment of the Pockels cell is changed, the polarization changes accordingly, and thus the switching state also changes. Thus, the present example is an example where the switching state is changed. The results of the experiment are shown in Table 2 below and in FIG. **13****.**

**Table 2**

| Sample # | Alignment | A delay (ns) | C delay (ns) | Vp (mV) | Vn2 (mV) | Vn2Np | Melting | Number of defective nozzles |
|---|---|---|---|---|---|---|---|---|
| 1 | A | 25.6 | 273.3 | 1900 | 8 | 0.004211 | None | 0 |
| 2 | B | 25.6 | 273.3 | 1800 | 16 | 0.008889 | None | 0 |
| 3 | C | 25.6 | 273.3 | 1800 | 32 | 0.017778 | None | 0 |
| 4 | D | 25.6 | 273.3 | 1750 | 50 | 0.02857 | Nearly none | 3 |
| 5 | E | 25.6 | 273.3 | 1730 | 55 | 0.03179 | Observed | 152 |
| 6 | F | 25.6 | 273.3 | 1700 | 69 | 0.040588 | Observed | 152 |
| 7 | G | 25.6 | 273.3 | 1500 | 80 | 0.053333 | Observed | 152 |

In this experiment, the largest noise component pulse was the second pulse **402.** As can be seen from the results of this experiment, as the alignment position was changed from A to G, the intensity Vn2 of the second pulse **402** gradually increased, and the intensity ratio Vn2/Vp also gradually increased. It was found that the number of needle holes rapidly increases when the intensity ratio exceeds 3%. Therefore, the results of the present example indicate that it is practically possible to realize a process that can be regarded substantially as a cool cutting process if the intensity ratio is 3% or less.

Another experiment similar to the experiment described above was conducted using stainless steels SUS AISI302 and SUS 17-7PH from Goodfellow Corporation, and substantially the same results as those described above were obtained. Therefore, it is believed that results as those described above are obtained as long as the nozzle plate is made of a stainless steel.

Moreover, similar experiments were conducted with other metals, and a similar tendency as that in the experiment results described above was observed. In addition, the upper limit value of the intensity ratio that is required for suppressing the occurrence of needle holes was smallest for an iron-containing material. In other words, as long as the intensity ratio is less than or equal to 2.5%, at which the occurrence of needle holes is suppressed with an iron-containing material, a minute pulse laser process without a thermal influence can be performed with many other metals.

While the examples described above are for a pulse width of 15 ps, similar results as those of the examples above were obtained for other pulse widths ranging from 0.1 ps to 100 ps. Therefore, a minute and precise process without a thermal influence can be performed in such a pulse width range, with various metals such as an iron-containing material, as long as the intensity ratio is 2.5% or less.

The laser processing apparatus and the laser processing method of the present invention are not limited to processing of a nozzle plate, but may alternatively be applied to various other types of workpiece. Moreover, the present invention is not limited to the hole-making process by swinging a beam as described above, and may alternatively be applied to various other processes, including a scan-machining process and a spot-machining process.

Thus, the embodiment and examples set forth above are merely illustrative in every respect, and should not be taken as limiting. The scope of the present invention is defined by the appended claims, and in no way is limited to the description set forth herein.

## Claims

1. A laser processing method, comprising the step of processing a material using an ultra-short pulse laser beam, **characterized in that** it comprises means to limit an intensity of a largest noise component pulse in the ultra-short pulse laser beam is 2.5% or less of an intensity of a primary pulse in the ultra-short pulse laser beam.

2. The laser processing method of claim 1, wherein the material is irradiated with the ultra-short pulse laser beam after the ultra-short pulse laser beam passes through a polarizer and a 1/2 waveplate rotating at a predetermined rotational speed.

3. The laser processing method of claim 1, wherein the material is irradiated with the ultra-short pulse laser beam after the ultra-short pulse laser beam passes through a polarizer and a 1/4 waveplate.

4. The laser processing method of claim 1, wherein a pulse width of the primary pulse of the ultra-short pulse laser beam is 0.1 ps to 100 ps.

5. The laser processing method of claim 1, wherein the material is made of an iron-containing material.

6. The laser processing method of claim 1, wherein the material is processed while the ultra-short pulse laser beam is swung with respect to the material.

7. The laser processing method of claim 1, wherein:
the material is a nozzle plate for an ink jet head; and
a nozzle is formed in the nozzle plate by using the ultra-short pulse laser beam.

8. A laser processing apparatus, comprising an ultra-short pulse laser, **characterized in that** it comprises means to limit an intensity of a largest noise component pulse in an ultra-short pulse laser beam to 2.5% or less of an intensity of a primary pulse in the ultra-short pulse laser beam.

9. The laser processing apparatus of claim 8, further comprising a polarizer, a 1/2 waveplate, and a rotation mechanism for rotating the 1/2 waveplate at a predetermined rotational speed.

10. The laser processing apparatus of claim 8, further comprising a polarizer, and a 1/4 waveplate.

11. The laser processing apparatus of claim 8, further comprising a swing mechanism for swinging the ultra-short pulse laser beam with respect to the material.

12. The laser processing apparatus of claim 8, further comprising a measurement apparatus including a photodetector and an oscilloscope for measuring a ratio of an intensity of a noise component pulse in the ultra-short pulse laser beam with respect to the intensity of the primary pulse in the ultra-short pulse laser beam.

13. The laser processing apparatus of claim 12, the ultra-short pulse laser further including:
a laser generation apparatus including a pump laser diode, a Q switching element, a laser medium, and a reflection mirror;
a laser control apparatus for controlling the laser generation apparatus based on an output value of the oscilloscope of the measurement apparatus; and
an optical system including a waveplate, a polarizer, a plurality of lenses, and a reflection mirror.

## Patentansprüche

1. Laserbearbeitungsverfahren, das den Schritt des Bearbeitens eines Materials unter Verwendung eines Ultrakurzpuls-Laserstrahls umfasst, **dadurch gekennzeichnet, dass** es ein Mittel zum Begrenzen einer Intensität eines Pulses mit der stärksten Rauschkomponente in dem Ultrakurzpuls-Laserstrahl auf 2,5 % oder weniger einer Intensität eines Primärpulses in dem Ultrakurzpuls-Laserstrahl umfasst.

2. Laserbearbeitungsverfahren nach Anspruch 1, wobei das Material mit dem Ultrakurzpuls-Laserstrahl bestrahlt wird, nachdem der Ultrakurzpuls-Laserstrahl durch einen Polarisator und ein 1/2-Wellenplättchen hindurchgetreten ist, das sich mit einer vorgegebenen Drehgeschwindigkeit dreht.

3. Laserbearbeitungsverfahren nach Anspruch 1, wobei das Material mit dem Ultrakurzpuls-Laserstrahl bestrahlt wird, nachdem der Ultrakurzpuls-Laserstrahl durch einen Polarisator und ein 1/4-Wellenplättchen hindurchgetreten ist.

4. Laserbearbeitungsverfahren nach Anspruch 1, wobei eine Pulsbreite des Primärpulses des Ultrakurzpuls-Laserstrahls 0,1 ps bis 100 ps beträgt.

5. Laserbearbeitungsverfahren nach Anspruch 1, wobei das Material aus einem eisenhaltigen Material besteht.

6. Laserbearbeitungsverfahren nach Anspruch 1, wobei das Material bearbeitet wird, während der Ultrakurzpuls-Laserstrahl in Bezug auf das Material geschwenkt wird.

7. Laserbearbeitungsverfahren nach Anspruch 1, wobei
das Material eine Düsenplatte für einen Tintenstrahlkopf ist; und
eine Düse in der Düsenplatte unter Verwendung des Ultrakurzpuls-Laserstrahls ausgebildet wird.

8. Laserbearbeitungsvorrichtung, die einen Ultrakurzpuls-Laserstrahl umfasst, **dadurch gekennzeichnet, dass** sie eine Einrichtung zum Begrenzen einer Intensität eines Pulses mit der stärksten Rauschkomponente in einem Ultrakurzpuls-Laserstrahl auf 2,5 % oder weniger einer Intensität des Primärpulses in dem Ultrakurzpuls-Laserstrahl umfasst.

9. Laserbearbeitungsvorrichtung nach Anspruch 8, das des Weiteren einen Polarisator, ein 1/2-Wellenplättchen und einen Drehmechanismus zum Drehen des 1/2-Wellenplättchens mit einer vorgegebenen Drehgeschwindigkeit umfasst.

10. Laserbearbeitungsvorrichtung nach Anspruch 8, die des Weiteren einen Polarisator und ein 1/4-Wellenplättchen umfasst.

11. Laserbearbeitungsvorrichtung nach Anspruch 8, die des Weiteren einen Schwenkmechanismus zum Schwenken des Ultrakurzpuls-Laserstrahls in Bezug auf das Material umfasst.

12. Laserbearbeitungsvorrichtung nach Anspruch 8, die des Weiteren eine Messvorrichtung umfasst, die einen Fotodetektor und ein Oszilloskop zum Messen eines Verhältnisses einer Intensität eines Rauschkomponenten-Pulses in dem Ultrakurzpuls-Laserstrahl in Bezug auf die Intensität des Primärpulses in dem Ultrakurzpuls-Laserstrahl enthält.

13. Laserbearbeitungsvorrichtung nach Anspruch 12, wobei der Ultrakurzpuls-Laserstrahl des Weiteren enthält:
eine Lasererzeugungsvorrichtung, die eine Pump-Laserdiode, eine Güteschalterelement, ein Lasermedium und einen Reflexionsspiegel enthält;
eine Laser-Steuervorrichtung zum Steuern der Lasererzeugungsvorrichtung auf Basis eines Ausgangswertes des Oszilloskops der Messvorrichtung; und
ein optisches System, das ein Wellenplättchen, einen Polarisator, eine Vielzahl von Linsen und einen Reflexionsspiegel enthält.

## Revendications

1. Procédé de traitement au laser, comprenant l'étape consistant à traiter un matériau en utilisant un faisceau laser à impulsions ultracourtes, **caractérisé en ce qu'**il comprend un moyen pour limiter une intensité d'une impulsion de composante de bruit la plus grande dans le faisceau laser à impulsions ultracourtes à 2,5% ou moins d'une intensité d'une impulsion primaire dans le faisceau laser à impulsions ultracourtes.

2. Procédé de traitement au laser de la revendication 1, dans lequel le matériau est irradié avec le faisceau laser à impulsions ultracourtes après le passage du faisceau laser à impulsions ultracourtes à travers un polariseur et une lame demi-onde tournant à une vitesse de rotation prédéterminée.

3. Procédé de traitement au laser de la revendication 1, dans lequel le matériau est irradié avec le faisceau laser à impulsions ultracourtes après le passage du faisceau laser à impulsions ultracourtes à travers un polariseur et une lame quart d'onde.

4. Procédé de traitement au laser de la revendication 1, dans lequel une largeur d'impulsion de l'impulsion primaire du faisceau laser à impulsions ultracourtes est de 0,1 ps à 100 ps.

5. Procédé de traitement au laser de la revendication 1, dans lequel le matériau est réalisé en un matériau contenant du fer.

6. Procédé de traitement au laser de la revendication 1, dans lequel le matériau est traité pendant que le faisceau laser à impulsions ultracourtes est fait osciller par rapport au matériau.

7. Procédé de traitement au laser de la revendication 1, dans lequel:
le matériau est une plaque de buse pour une tête à jet d'encre; et
une buse est formée dans la plaque de buse en utilisant le faisceau laser à impulsions ultracourtes.

8. Appareil de traitement au laser, comprenant un laser à impulsions ultracourtes, **caractérisé en ce qu'**il comprend un moyen pour limiter une intensité d'une impulsion de composante de bruit la plus grande dans le faisceau laser à impulsions ultracourtes à 2,5% ou moins d'une intensité d'une impulsion primaire dans le faisceau laser à impulsions ultracourtes.

9. Appareil de traitement au laser de la revendication 8, comprenant en plus un polariseur, une lame demi-onde, et un mécanisme de rotation pour mettre en rotation la lame demi-onde à une vitesse de rotation prédéterminée.

10. Appareil de traitement au laser de la revendication 8, comprenant en plus un polariseur, et une lame quart d'onde.

11. Appareil de traitement au laser de la revendication 8, comprenant en plus un mécanisme d'oscillation destiné à faire osciller le faisceau laser à impulsions ultracourtes par rapport au matériau.

12. Appareil de traitement au laser de la revendication 8, comprenant en plus un appareil de mesure incluant un photo-détecteur et un oscilloscope pour mesurer un rapport d'une intensité d'une impulsion de composante de bruit dans le faisceau laser à impulsions ultracourtes par rapport à l'intensité de l'impulsion primaire dans le faisceau laser à impulsions ultracourtes.

13. Appareil de traitement au laser de la revendication 12, le laser à impulsions ultracourtes incluant en plus:
un appareil de génération de laser incluant une diode laser de pompage, un élément de commutation Q, un support laser, et un miroir réfléchissant;
un appareil de commande de laser destiné à commander l'appareil de génération de laser sur la base d'une valeur de sortie de l'oscilloscope de l'appareil de mesure; et
un système optique incluant une lame d'onde, un polariseur, une pluralité de lentilles, et un miroir réfléchissant.
